# EUROPEAN PATENT APPLICATION

(11) **EP 3 979 171 A1**
(43) Date of publication of application: **06.04.2022**
(21) Application number: 20815186.0
(22) Date of filing: 13.05.2020
(51) Int. Cl.: G06Q 20/10

(54) **PAYMENT PROCESSING METHOD, ELECTRONIC DEVICE AND COMPUTER READABLE STORAGE MEDIUM**

(30) Priority: 24.05.2019 CN 201910437607
(71) Applicant: TENCENT TECHNOLOGY (SHENZHEN) COMPANY LIMITED, Shenzhen, GUANGDONG 518057, (CN)
(72) Inventor: WU, Jinfa, Shenzhen, Guangdong 518057 (CN); WANG, Jun, Shenzhen, Guangdong 518057 (CN); LU, Xinchang, Shenzhen, Guangdong 518057 (CN); WANG, Shaoming, Shenzhen, Guangdong 518057 (CN); GUO, Runzeng, Shenzhen, Guangdong 518057 (CN)
(74) Representative: EP&C
(86) International application number: PCT/CN2020/089945
(87) International publication number: WO 2020/238622

(57) **Abstract**

Provided are a payment processing method, an electronic device and a computer readable storage medium, which relates to the field of communication technology. The first device obtains the order information and sends it to the second device for display (300); the first device receives the payment code sent by the second device, the payment code is generated by the second device according to the user payment identity after receiving the payment confirmation instruction triggered by the user (310); based on the payment code, the first device performs payment processing on the order information from the payment account corresponding to the payment code to obtain the payment result (320); the first device sends the payment result to the second device for display (330). The first device and the second device are capable of two-way communication, and can send and receive information to each other, which solves the problem that the payment device and the cash register in the prior art cannot realize two-way communication, and is helpful to improve the functional diversity of payment device and enhance user consumption experience.

## Description

This application claims priority to Chinese Patent Application No. 201910437607.9, entitled "PAYMENT PROCESSING METHOD AND APPARATUS" filed with the China National Intellectual Property Administration on May 24, 2019, which is incorporated by reference in its entirety.

### FIELD

This application relates to the technical field of communications, and in particular, to payment processing.

### BACKGROUND

At present, the number of mobile payment users is growing rapidly, payment scenarios are greatly enriched because of a rapid penetration of the mobile payment into the field of offline payment, and requirements of the users on mobile payments are increasingly high. In the conventional art, a one-way communication is performed between a payment device (for example, a code scanner or a face recognition payment device) and a cash register. The one-way communication is implemented in a way that information can be transmitted only from the payment device to the cash register side for receiving and processing, while the cash register cannot transmit any information to the payment device. As a result, two-way communication between the payment device and the cash register may not be achieved, and functions of the payment device may not be diversified.

### SUMMARY

A payment processing method, an electronic device, and a computer-readable storage medium are provided according to embodiments of this application, to solve a problem in the conventional art that two-way communication cannot be achieved between a payment device and a cash register, thereby facilitating diversity of functions of the payment device.

Technical solutions provided in the embodiments of this application are described as follows.

A payment processing method is provided according to an embodiment of this application. The payment processing method is performed by a first device and includes:
obtaining order information and transmitting the order information to a second device for display;
receiving a payment code transmitted by the second device, the payment code being generated by the second device based on a user payment identity of a user after receiving a payment confirmation instruction triggered by the user;
performing, from a payment account corresponding to the payment code, payment processing on the order information based on the payment code, to obtain a payment result; and
transmitting the payment result to the second device for display.

A payment processing method is provided according to another embodiment of this application. The payment processing method is performed by a second device and includes:
receiving order information transmitted by a first device;
displaying the order information;
generating a payment code based on a user payment identity of a user after receiving a payment confirmation instruction triggered by the user, and transmitting the payment code to the first device;
receiving a payment result transmitted by the first device, the payment result being obtained by the first device based on the payment code by performing, from a payment account corresponding to the payment code, payment processing on the order information; and
displaying the payment result.

A payment processing apparatus is provided according to another embodiment of this application. The payment processing apparatus includes: a first obtaining module, a two-way communication module, and a processing module. The first obtaining module is configured to obtain order information. The two-way communication module is configured to transmit the order information to a second device for display, and receive a payment code transmitted by the second device. The payment code is generated by the second device based on a user payment identity of a user after receiving a payment confirmation instruction triggered by the user. The processing module is configured to perform, from a payment account corresponding to the payment code, payment processing on the order information based on the payment code, to obtain a payment result. The two-way communication module is further configured to transmit the payment result to the second device for display.

A payment processing apparatus is provided according to another embodiment of this application. The payment processing apparatus includes: a two-way communication module, a first display module, a generation module, and a second display module. The two-way communication module is configured to receive order information transmitted by a first device. The first display module is configured to display the order information. The generation module is configured to generate a payment code based on a user payment identity of a user after a payment confirmation instruction triggered by the user is received. The two-way communication module is further configured to transmit the payment code to the first device, and receive a payment result transmitted by the first device. The payment result is obtained by the first device based on the payment code by performing, from a payment account corresponding to the payment code, payment processing on the order information. The second display module is configured to display the payment result.

An electronic device is provided according to another embodiment of this application. The electronic device includes a memory, a processor, and a computer program stored in the memory and executable on the processor. The processor, when executing the program, performs steps of any one of the foregoing payment processing methods.

A computer-readable storage medium is provided according to another embodiment of this application, which stores a computer program. The computer program, when executed by a processor, performs steps of any one of the foregoing payment processing methods.

A computer program product is provided according to another embodiment of this application, which includes instructions. The instructions, when run on a computer, cause the computer to perform the steps of any one of the foregoing payment processing methods.

In the embodiments of this application, the first device obtains order information and transmits the order information to the second device, the second device displays the order information, and generates a payment code and transmits the payment code to the first device. The first device performs payment processing based on the payment code, and transmit a payment result to the second device, so that the second device can display the payment result to the user. In this way, the first device and the second device can perform two-way communication therebetween and can receive and transmit information from and to each other, thereby solving a problem in the conventional art that a cash register cannot transmit any message to a payment device. In addition, the order information and the payment result can be displayed on the second device, so that the user can intuitively obtain details about a payment process, thereby facilitating diversity of the functions of the payment device, thus improving user consumption experience and improving security and accuracy of payment.

### BRIEF DESCRIPTION OF THE DRAWINGS

FIG. 1 is a schematic effect diagram of a communication manner between a payment device and a cash register in the conventional art.
FIG. 2 is a schematic diagram of an application architecture of a payment processing method according to an embodiment of this application.
FIG. 3 is a flowchart of a payment processing method according to an embodiment of this application.
FIG. 4 is a flowchart of another payment processing method according to an embodiment of this application.
FIG. 5 is a flowchart of a payment processing method according to an embodiment of this application.
FIG. 6 is a flowchart of another payment processing method according to an embodiment of this application.
FIG. 7 is a schematic diagram of a principle of a two-way communication framework according to an embodiment of this application.
FIG. 8 is a schematic diagram of a design effect of a link layer according to an embodiment of this application.
FIG. 9 is a schematic diagram of a receiving and transmitting process of a transport layer according to an embodiment of this application.
FIG. 10 is a schematic diagram of a request-response process of an application layer according to an embodiment of this application.
FIG. 11 is a flowchart of an interaction where a second device transmits information to a first device.
FIG. 12 is a flowchart of an interaction where a first device transmits information to a second device.
FIG. 13 is a schematic effect diagram of a two-way communication manner between a payment device and a cash register according to an embodiment of this application.
FIG. 14 is a schematic diagram of a process interface of a membership information display stage according to an embodiment of this application.
FIG. 15 is a schematic diagram of a process interface of a payment detail display stage according to an embodiment of this application.
FIG. 16 is a schematic structural diagram of a payment processing apparatus according to an embodiment of this application.
FIG. 17 is a schematic structural diagram of another payment processing apparatus according to an embodiment of this application.
FIG. 18 is a schematic structural diagram of a server according to an embodiment of this application.
FIG. 19 is a schematic structural diagram of an electronic device according to an embodiment of this application.

### DESCRIPTION OF EMBODIMENTS

The following clearly and completely describes the technical solutions in the embodiments of this application with reference to the drawings in the embodiments of this application. Apparently, the described embodiments are merely some of the embodiments of this application rather than all of the embodiments. All other embodiments obtained by a person of ordinary skill in the art based on the embodiments of this application without creative efforts shall fall within the protection scope of this application.

To facilitate the understanding of the embodiments of this application, several concepts are briefly introduced in the following.

Face recognition represents a biometric recognition technology for identity recognition based on facial feature information of a person, which includes a series of conventional technologies of acquiring an image or a video stream including a face by using a video camera or a camera, automatically detecting and tracking the face in the image, and recognizing the detected face.

Face recognition payment is performed mainly based on the face recognition technology. Through obtaining of face information, user identity of a user who is bound to the face information is recognized without entering other information by the user, and a payment is completed based on information of the recognized user identity.

Two-way communication represents a manner in which both communication parties can receive and transmit data from and to each other.

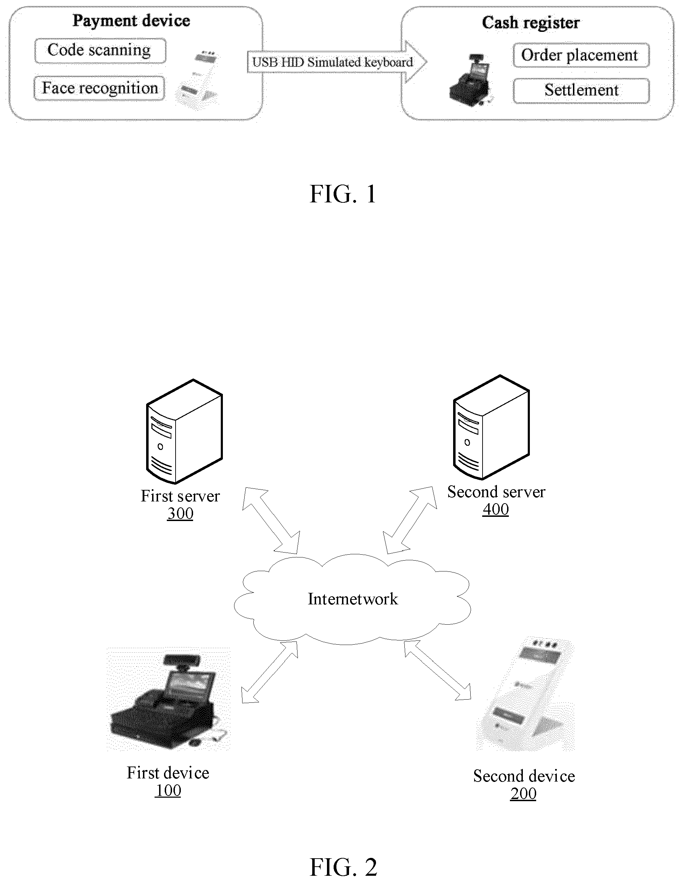

In the conventional art, a store or a merchant usually uses a payment device and a cash register in combination to enable a customer to pay for a bill. A one-way communication manner is performed between the payment device (for example, a code scanner) and the cash register, and a payment processing process based on the one-way communication manner is implemented in a way that information can only be transmitted from the payment device to the cash register, and the cash register performs payment processing based on the received information. For example, reference is made to FIG. 1, which is a schematic effect diagram of a communication manner between a payment device and a cash register in the conventional art. One-way communication between the payment device and the cash register is performed by using a universal serial bus (USB) human interface device (HID) simulated keyboard. A USB HID class is a standard device class of a USB device, and a human-computer interaction keyboard may be simulated through a USB HID protocol. Therefore, the payment device may support code scanning or face recognition, and the cash register may support payment processing such as order placement and settlement. The payment device transmits acquired information to the cash register, and the cash register performs payment processing accordingly to complete a payment.

However, in the payment processing process in the conventional art, the one-way communication manner is performed between the payment device and the cash register, an entire payment process is controlled simply, resulting in an undiversified function of the payment device. As a result, the payment device has a poor information processing capability, which further reduces a payment control capability of the payment device. Further, the payment processing process cannot meet the requirement of a merchant who intends to display membership, order, settlement and other information of a customer on the payment device during the payment process of the customer, and cannot meet the requirement of the customer who wants to intuitively obtain information about various payment details during the payment process, reducing consumption experience. It can be seen that, to overcome disadvantages in the above payment processing process, it is necessary to achieve the two-way communication between the cash register and the payment device. In view of this, a payment processing method is provided in this application.

In the embodiments of this application, a cash register is used as a first device, a payment device is used as a second device, and a payment processing method is provided. The first device is physically connected to the second device, a physical communication link is abstracted such that standard read interface, write interface, and control interface are defined at a link layer, to ignore differences in physical communication links of hardware, thereby achieving a universal two-way communication framework. The first device and the second device may receive and transmit data packets from and to each other by using a two-way communication module, so that the first device and the second device both have a function of two-way communication. The first device obtains order information and may transmit the order information to the second device, the second device may display the order information, and the first device receives a payment code transmitted by the second device, performs payment processing based on the payment code, and transmits a payment result to the second device for display. The first device and the second device can perform two-way communication, thereby solving the problem in the conventional art that the cash register cannot transmit any message to the payment device. The order information and the payment result can be displayed on the second device, so that a user can obtain information about payment details during a payment process, thereby improving consumption experience.

In addition, the first device may transmit a user identity information request to the second device, and receive user identity information returned by the second device. In a case that the first device determines that the user identity information indicates that the user is a registered member user, the first device obtains membership information corresponding to the user identity information, and transmits the membership information to the second device for display. In this way, the second device may further display the membership information of the user, improving convenience and user interactivity of the payment process, thus improving user consumption experience.

Reference is made to FIG. 2, which is a schematic diagram of an application architecture of a payment processing method according to an embodiment of this application. The application architecture includes a first device 100, a second device 200, a first server 300, and a second server 400.

The first device 100 may be a merchant-oriented terminal, such as a cash register, or may be another terminal device, which is not limited in this application. In addition, the first device 100 may be installed with various applications (APPs), such as checkout system software.

The second device 200 is a client-oriented or customer-oriented terminal, such as a payment device, which is not limited in this application. In addition, in this embodiment of this application, the second device 200 is provided with an image acquisition apparatus such as a camera, which can acquire face information of a user. The second device 200 supports face recognition of the user, and may further support a code scanning function, which is not limited in this application. In addition, the second device 200 is further provided with a display interface, and can display information to the user through the display interface.

In this embodiment of this application, the first device 100 may be physically connected to the second device 200 by using a serial port, a network cable, a USB, Bluetooth, or the like, which is not limited in this application. Moreover, the first device 100 and the second device 200 receive and transmit data packets from and to each other by using two-way communication modules, and the two devices have function to receive and transmit messages from and to each other, that is, a two-way communication function. For example, the second device 200 may transmit a membership code or a payment code to the first device 100, and the first device 100 may receive the membership code or the payment code transmitted by the second device 200, and after processing, the first device transmits membership information or a payment result to the second device 200.

The first server 300 may provide various network services for the first device 100. For different application software on the first device 100, the first server 300 may be considered as a backend server for providing corresponding network services. For example, in this embodiment of this application, if the first device 100 is a cash register and the first server 300 is a backend server of a corresponding merchant, the first device 100 may transmit a member login request to the first server 300 based on a received membership code, and the first server 300 returns membership information of a corresponding user to the first device 100.

The second server 400 may provide various network services for the second device 200. In this embodiment of this application, the second device 200 may further support different payment platforms, from which the user may select a payment platform according to requirements for payment. For each of the different payment platforms, the second server 400 may be a backend server providing corresponding network services. For example, the second device 200 may transmit acquired face information to the second server 400, to request for user identity information, and the second server 400 may perform face recognition based on the face information, and obtain a user payment identity of the user in the payment platform. In addition, the second server 400 may further communicate with the first server 300, and obtain a membership code corresponding to the user payment identity from the first server 300, the membership code represents an identity identification of the user that is pre-registered at the merchant. Then, the second server 400 transmits the obtained membership code to the second device 200.

Each of the first server 300 and the second server 400 may be one server, or a server cluster or a cloud computing center including several servers.

Communication between the first device 100 and the first server 300, communication between the second device 200 and the second server 400, and communication between the first server 300 and the second server 400 may be performed through internetwork. The internetwork described above may use a standard communication technology and/or protocol. The internetwork is usually the Internet, but may alternatively be any other network, including but not limited to, a local area network (LAN), a metropolitan area network (MAN), a wide area network (WAN), a mobile network, a wired network, a wireless network, a dedicated network, a virtual dedicated network or any combination thereof. In some embodiments, technologies and/or formats such as the HyperText Markup Language (HTML) and the Extensible Markup Language (XML) are used for representing data exchanged through the network. In addition, all or some links may be encrypted by using conventional encryption technologies such as the Secure Sockets Layer (SSL), the Transport Layer Security (TLS), a virtual private network (VPN), and the Internet Protocol Security (IPsec). In some other embodiments, customized and/or dedicated data communication technologies may be used in place of or in addition to the foregoing data communication technologies.

It is to be noted that the diagram of the application architecture in this embodiment of this application is intended to more clearly describe the technical solutions of the embodiments of this application, and does not constitute a limitation to the technical solutions provided in the embodiments of this application. For other application architectures and service applications, the technical solutions provided in the embodiments of this application are also applicable to similar problems.

It is to be noted that in the embodiments of this application, description is made schematically by using an example in which a payment processing method is applied to the application architecture shown in FIG. 2.

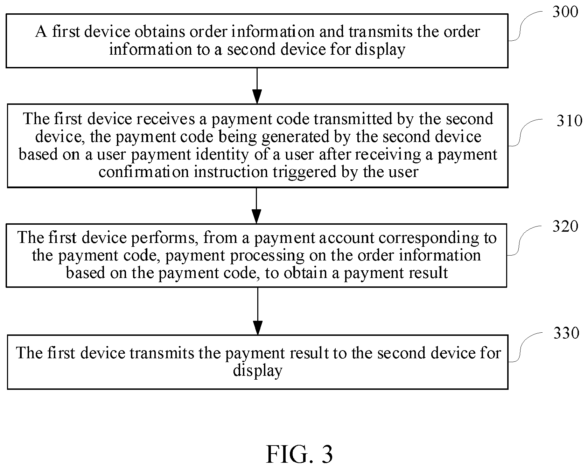

Based on the foregoing embodiments, reference is made to FIG. 3, which is a flowchart of a payment processing method according to an embodiment of this application. The method is mainly applied to a side of a first device and includes the following steps 300 to 330.

In step 300, the first device obtains order information and transmits the order information to a second device for display.

In this embodiment of this application, for example, the first device is a cash register and the second device is a payment device. The first device and the second device have a function of receiving and transmitting information from and to each other by using a designed two-way communication framework, that is, two-way communication modules.

In this way, when a user pays for a bill, a cashier enters product information of a product to be purchased by the user, and the first device obtains finally generated order information, and may transmit the order information to the second device for display.

The order information includes, for example, a name, a price, and a total amount of the product, and may also include discount information, which is not limited in this embodiment of this application.

In step 310, the first device receives a payment code transmitted by the second device. The payment code is generated by the second device based on a user payment identity after receiving a payment confirmation instruction triggered by the user.

Specifically, after receiving the order information, the second device may display the order information to the user. Further, the second device may further prompt the user to confirm the order information, so that after confirming that there is no error, the user clicks on the second device to determine a payment way and trigger the payment confirmation instruction. In this way, after receiving the payment confirmation instruction, the second device can generate a payment code of the user based on the user payment identity of the user and transmit the payment code to the first device.

The payment code is used for uniquely representing the user payment identity of the user. A representation manner of the payment code is not limited in this embodiment of this application. For example, the payment code may be represented by a two-dimensional code, or represented in a form of a picture or numbers.

In addition, the second device may generate the payment code based on the user payment identity confirmed through identity authentication. Therefore, a possible implementation for the second device to generate the payment code is further provided in this embodiment of this application, which is described as follows. The second device obtains an identity characteristic (for example, obtains face information) entered by the user, and transmits the user identity characteristic to a corresponding server. The corresponding server performs matching and recognition based on a preset mapping relationship between user identity characteristics and user payment identities (for example, a mapping relationship between user face information and user payment identities), and returns the matched and recognized user payment identity to the second device, so that the second device generates a payment code based on the user payment identity. The identity characteristic is used for representing user identity information. The identity characteristic is not limited in this embodiment of this application. The identity characteristic may include, for example, at least one of a face image of the user, a fingerprint of the user, a mobile phone number of the user, ID card information of the user, account information, and password information.

For example, the payment code may represent a payment way selected by the user on the second device. For example, if WeChat payment is selected, the user payment identity of the user in a WeChat payment platform, that is, a WeChat user identity, is confirmed through face recognition, and a payment code of WeChat is generated. The payment code is a single-use code, and is updated for each payment. The second device may generate the payment code online or offline. The payment code may include a string of payment numbers, and a backend server of WeChat stores a mapping relationship between the payment numbers and the WeChat user, for subsequent verification from the backend server of WeChat when the first device performs a payment based on the payment code.

Further, after the first device obtains the order information and transmits the order information to the second device, the method may further include: updating, by the first device after the first device receives an order modification request returned by the second device, the order information based on the order modification request.

That is, after the second device displays the order information to the user, if the user confirms that the order is incorrect, the user may further click "modify the order" or " incorrect order" to trigger the order modification request, so that after receiving the order modification request, the first device may update the order information by deleting previous order information and obtaining new order information or by editing and modifying the previous order information, and retransmit the updated order information to the second device for display, so that the user can confirm the updated order information again.

In this way, the user can obtain order details such as a price of each product before paying for the order, thereby ensuring correctness of the payment, thus improving user consumption experience.

In step 320, the first device performs, from a payment account corresponding to the payment code, payment processing on the order information based on the payment code, to obtain a payment result.

The payment result is used for representing a result of the payment processing performed on the order information by the first device. Moreover, the payment result may include payment success information, a payment amount, or payment failure information and the like, and may further include membership information updated after payment, for example, information on how many bonus points are added, newly added coupons, and the like, which may be set according to actual requests and needs, and is not limited in this embodiment of this application.

Step 320 may be performed as follows. The first device submits a payment request for paying for the order information to a first server based on the payment code. The first server (for example, a backend server of a merchant) transmits the payment request to a second server (for example, a backend server corresponding to the foregoing payment platform). The second server performs verification and matching on the payment code, and in a case that the verification and matching are performed successfully, the second server performs, from a payment account of a user corresponding to the payment code, payment processing on the order information, and returns the payment result to the first device by using the first server, so that the first device obtains the final payment result.

In step 330, the first device transmits the payment result to the second device for display.

In this embodiment of this application, the second device may receive the payment result transmitted by the first device, and display the payment result to the user, so that the user can obtain the payment result of the order information on the second device, and an entire payment process is completed in this way. The user can obtain payment information of the order information by using the second device, which facilitates diversity of functions of the second device.

In this embodiment of this application, the first device and the second device can receive and transmit information from and to each other, and the first device and the second device have more information transmission and interaction functions. The first device may transmit the order information and the payment result to the second device for display, solving the problem in the conventional art that the two-way communication cannot be achieved between the payment device and the cash register. In this way, the user can intuitively view details of the entire payment process, so that the payment process is transparent, thereby ensuring the correctness of the payment, thus improving user consumption experience.

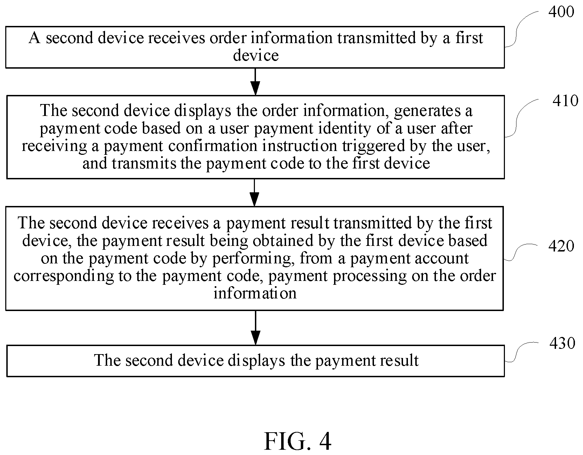

Based on the foregoing embodiments, another payment processing method is provided in an embodiment of this application, which is mainly applied to a second device. Reference is made to FIG. 4, which is a flowchart of another payment processing method according to an embodiment of this application. The method includes the following steps 400 to 430.

In step 400, the second device receives order information transmitted by a first device.

In step 410, the second device displays the order information, generates a payment code based on a user payment identity of a user after receiving a payment confirmation instruction triggered by the user, and transmits the payment code to the first device.

In step 420, the second device receives a payment result transmitted by the first device. The payment result is obtained by the first device based on the payment code by performing, from a payment account corresponding to the payment code, payment processing on the order information.

In step 430, the second device displays the payment result.

It is to be noted that, in this embodiment of this application, the payment processing method on a side of the second device corresponds to the payment processing method on a side of the first device, and specific implementation processes are the same. Therefore, details are not described herein again.

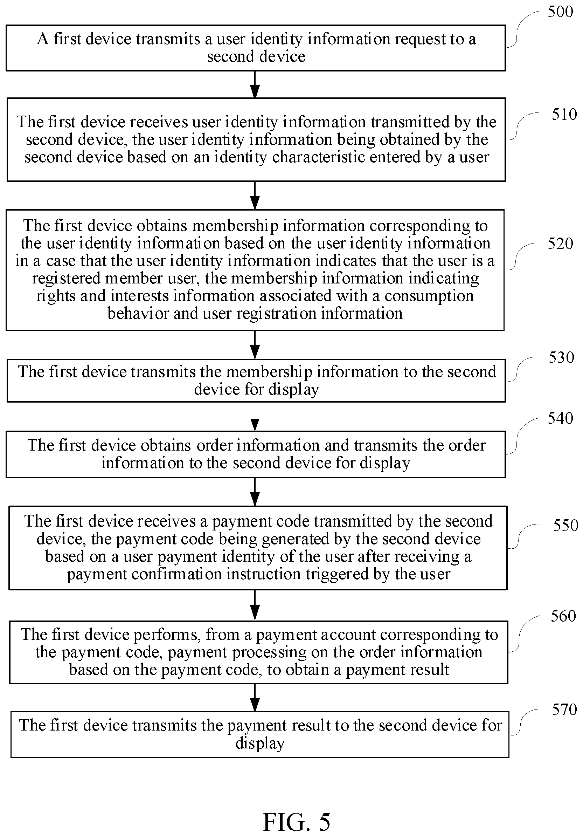

Further, the first device may further transmit membership information to the second device, so that the second device may also display the membership information in addition to the order information and the payment result. Specifically, reference is made to FIG. 5, which is a flowchart of another payment processing method according to an embodiment of this application. The method is mainly applied to the first device and includes the following steps 500 to 570.

In step 500, the first device transmits a user identity information request to the second device.

For example, when a user pays for a bill, a cashier triggers the user identity information request on the first device (for example, a cash register), so that the first device transmit the user identity information request to the second device (for example, a payment device) by using a two-way communication module, for the second device to identify the user.

In step 510, the first device receives the user identity information transmitted by the second device. The user identity information is obtained by the second device based on an identity characteristic entered by the user.

Specifically, after receiving the user identity information request, the second device may first prompt the user to enter the identity characteristic (for example, prompt the user to perform code scanning or face recognition), and after obtaining the identity characteristic entered by the user, the second device may perform matching processing on the identity characteristic by using a server, to obtain user identity information corresponding to the identity characteristic.

The user identity information is used for indicating an identity of the user, and the user identity information is not limited in this embodiment of this application. For example, if the identity characteristic is face information, the user identity information is obtained by the second device based on the acquired face information through a matching operation of the server. If the user identity information indicates that the user is a registered member user, the user identity information is a membership code of the user.

For example, if the second device supports face recognition payment, after receiving the user identity information request transmitted by the first device, the second device triggers face recognition. The second device prompts the user to face a camera for face scanning, to acquire the face information of the user, and transmit the face information to a second server, so that the second server first performs the face recognition, determines an identity (that is, a user payment identity) corresponding to the face information, then requests a membership code corresponding to the identity from the first server, and returns the membership code obtained from the first server to the second device, so that the second device transmits the membership code to the first device.

Further, if the face recognition fails based on the face information, it indicates that the user is not a registered member user, the second device may return to the first device prompt information indicating that the user is not a registered member user, in this case, it is unnecessary for the first device to request membership information.

In step 520, the first device obtains, based on the user identity information, membership information corresponding to the user identity information in a case that the user identity information indicates that the user is a registered member user. The membership information indicates rights and interests information associated with a consumption behavior and user registration information.

Specifically, the first device requests member login from the first server based on the user identity information, and obtains the membership information corresponding to the user identity information from the first server.

The membership information includes, for example, current membership rights and interests, a membership level, and a bonus point, which is not limited in this embodiment of this application.

In step 530, the first device transmits the membership information to the second device for display.

It can be seen that the user may obtain the membership information and learn membership rights and interests of the user on the second device, thereby improving user consumption experience.

After step 530 is further performed, by using the first device, the cashier may enter product information, generate an order, and perform subsequent payment processing, that is, the following steps 540 to 570.

In step 540, the first device obtains order information and transmits the order information to the second device for display.

In step 550, the first device receives a payment code transmitted by the second device. The payment code is generated by the second device based on a user payment identity of the user after receiving a payment confirmation instruction triggered by the user.

In step 560, the first device performs, from a payment account corresponding to the payment code, payment processing on the order information based on the payment code, to obtain a payment result.

In step 570, the first device transmits the payment result to the second device for display.

It can be seen that the first device may further obtain the membership information, and calculate for some information (for example, an actual price of a discounted product) in the order information based on the membership information (for example, whether there is a coupon, or whether there are membership discounts for certain products) when the order information is generated. Moreover, the first device may further transmit the membership information to the second device, and the second device may display the membership information, the order information, the payment result, and other information. Therefore, control to a payment process is stronger and richer.

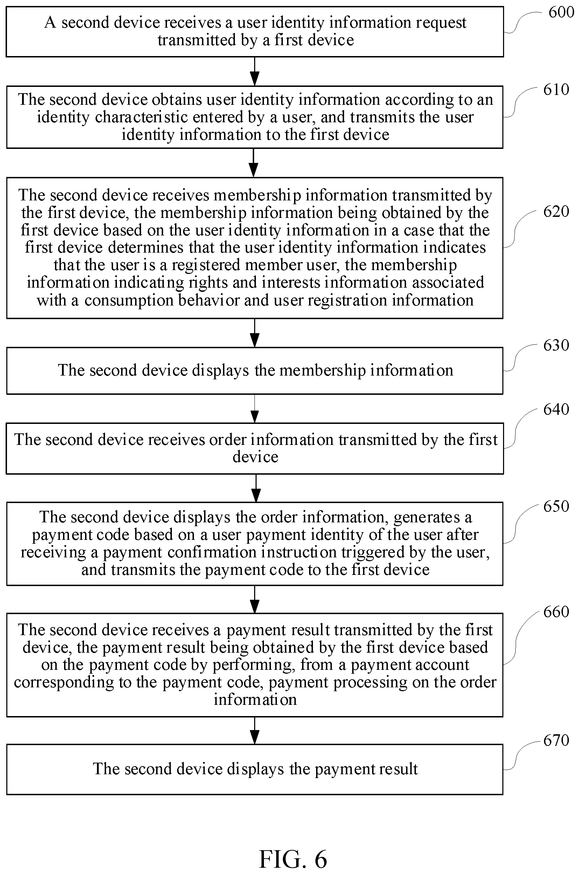

Correspondingly, corresponding to the embodiment shown in FIG. 5, another payment processing method is provided according to an embodiment of this application. Reference is made to FIG. 6, which is a flowchart of another payment processing method according to an embodiment of this application. The method is mainly applied to a second device and includes the following steps 600 to 670.

In step 600, the second device receives a user identity information request transmitted by a first device.

In step 610, the second device obtains user identity information based on an identity characteristic entered by a user, and transmits the user identity information to the first device.

In step 620, the second device receives membership information transmitted by the first device. The membership information is obtained by the first device based on the user identity information in a case that the first device determines that the user identity information indicates that the user is a registered member user, and the membership information indicates rights and interests information associated with a consumption behavior and user registration information.

In step 630, the second device displays the membership information.

In step 640, the second device receives order information transmitted by the first device.

In step 650, the second device displays the order information, generates a payment code based on a user payment identity of the user after receiving a payment confirmation instruction triggered by the user, and transmits the payment code to the first device.

In step 660, the second device receives a payment result transmitted by the first device. The payment result is obtained by the first device based on the payment code by performing, from a payment account corresponding to the payment code, payment processing on the order information.

In step 670, the second device displays the payment result.

It can be seen that the first device and the second device have two-way communication capabilities. The second device may further receive the membership information, the order information, the payment result, and the like transmitted by the first device for display, so as to display information about more payment details to the user.

It is to be noted that in this embodiment of this application, the first device and the second device achieve the two-way communication function by using a designed two-way communication framework. Specifically, the first device and the second device receive and transmit data packets from and to each other by using two-way communication modules.

The data packet may include the user identity information request, the membership information, the order information, the payment code, the payment result, and the like, and may further include some response packets. Interaction of the data packet is implemented by using the two-way communication module.

The first device and the second device receive and transmit data packets from and to each other by using two-way communication modules in a way that:
the first device transmits a data packet sequentially through a service layer, an application layer, a transport layer, and a link layer, and receives a data packet sequentially through the link layer, the transport layer, the application layer, and the service layer; and
the second device transmits the data packet sequentially through the service layer, the application layer, the transport layer, and the link layer, and receives the data packet sequentially through the link layer, the transport layer, the application layer, and the service layer.

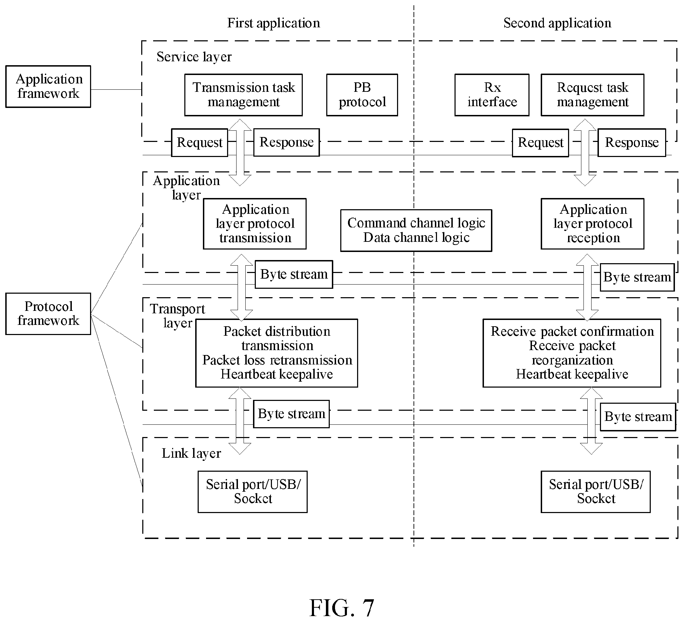

Specifically, the two-way communication framework of the embodiments of this application is described in the following. Reference is made to FIG. 7, which is a schematic diagram of a principle of a two-way communication framework according to an embodiment of this application.

As shown in FIG. 7, a protocol framework and an application framework are shown. The application framework includes a service layer, and the service layer is invoked during use of a service. Different interfaces or protocols such as a protocol buffer (PB) protocol and a receive (Rx) interface may be set based on different services, which are not limited in this embodiment of this application. The protocol framework may be divided into a link layer, a transport layer, and an application layer. The layers cooperate with each other to realize a two-way communication function. In this embodiment of this application, a layered design is mainly adopted and protocol levels are abstracted. The layers in the protocol framework are described below.

### (1) Link layer.

Function definition: The link layer is responsible for link layer data connection, ignoring differences in physical communication links of hardware, and providing an upper layer with capabilities to read and write original data and a capability to operate the physical communication link, that is, a capability to control on/off of physical communication.

Specifically, standard read interface, write interface, and control interface are defined at the link layer, and a link layer protocol adapts to the physical communication link, so that the data packet is transmitted to the transport layer through the physical communication link and the standard read interface, write interface or control interface, and the data packet is transmitted to the physical communication link through the transport layer and the standard read interface, write interface or control interface.

The physical communication link at the link layer adopts any one of an RS232 interface, a USB, a network cable, and Bluetooth, and is, for example, a socket interface, a serial port, and the like. However, this embodiment of this application is not limited to these physical communication links, and other physical communication links may also be adopted according to actual requirements. In FIG. 7, only the serial port, the USB, and the socket interface are described as an example.

It can be seen that a conventional design which is usually used for specific hardware, such as a design for the serial port has poor adaptability and portability because invocation interfaces or protocols of the link layer and the transport layer are required to be remodified when another physical communication link is to be used. Compared with the conventional design, in this embodiment of this application, the physical communication link for actual communication is abstracted, and multiple transmission mediums can be transmitted, that is, different physical communication links are supported, and differences between the different physical communication links are ignored. In this way, regardless of the USB, the serial port, the network cable, or the Bluetooth, communication can be performed by using the two-way communication framework provided in this embodiment of this application, without performing any modification. When the physical communication link is to be switched, it is only required to define the standard read interface, write interface, and control interface required by the link layer, and this is completely invisible to the upper layer.

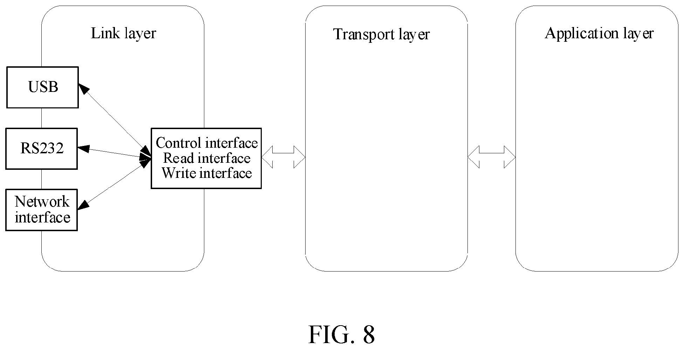

Reference is made to FIG. 8, which is a schematic diagram of a design effect of a link layer according to an embodiment of this application. As shown in FIG. 8, the standard read interface, write interface, and control interface are defined at the link layer. The link layer and the transport layer perform data communication through the standard read interface, write interface or control interface, and the transport layer only needs to be designed to invoke the standard read interface, write interface or control interface. Different physical communication links are invisible to the transport layer. The different physical communication links such as the USB, the RS232 interface, and a network port are adapted to the standard read interface, write interface or control interface.

In this embodiment of this application, when the link layer is implemented, the required physical communication link may be used to connect a first device and a second device. For example, the second device uses the RS232 interface as an underlying communication link, and uses an RS232 to USB cable to communicate with the first device.

### (2) Transport layer.

Function definition: The transport layer is located between the application layer and the link layer, and is mainly responsible for reading data of the link layer, performing tasks such as parsing, verification, acknowledgement, and deduplication on the data, correctly delivering valid data to the application layer, and performing tasks such as assembling, transmitting, and waiting for acknowledgement on data to be transmitted by the application layer, thereby providing a stable, reliable, and state-knowable communication interface for the upper service layer.

Specifically, according to a customized protocol packet format, the data transmitted from the application layer and the data read from the link layer are separately parsed, and implementation logic such as verification, acknowledgement (ACK), or retransmission is agreed upon, and connectivity of the physical communication link of the link layer is detected at the transport layer by using a heartbeat keepalive mechanism.

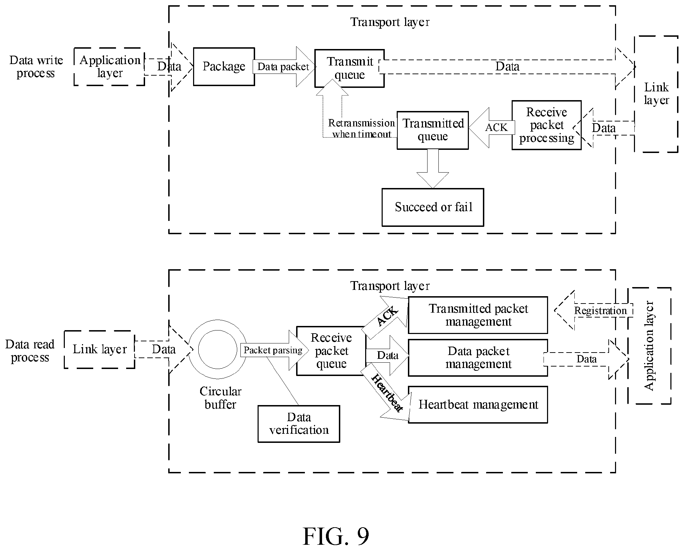

FIG. 9 is a schematic diagram of a receiving and transmitting process of a transport layer according to an embodiment of this application. The process includes a data write process and data read process, which are described in the following two aspect.

In a first aspect, the data write process, that is, a transmission process is described, which is performed to transmit the data of the application layer to the link layer in the following steps S1 to S5.

In step S1, the data transmitted by the application layer is packaged and is placed into a transmit queue in a form of data packets.

In step S2, the data packets in the transmit queue is sequentially transmitted to the link layer.

In step S3, data returned by the link layer is received and receive packet processing is performed.

In step S4, if the data packet is an ACK packet, it is determined that a corresponding data packet in the transmitted queue is transmitted successfully, and if no packet is received or the number of retransmissions is exceeded, it is determined that the corresponding data packet in the transmitted queue is failed to be transmitted.

In step S5, an acknowledgement response from the link layer is waited for the data packet in the transmitted queue, and the data packet is retransmitted if a time threshold is exceeded.

In a second aspect, the data read process, that is, a receiving process is described, which is performed to read the data of the link layer and transmit the data to the application layer in the following steps S11 to S 13.

In step S 11, the data of the link layer is parsed, and data verification is performed.

The data verification may be performed by using a signature algorithm, which is not limited herein. The data verification may be performed to verify whether the data is correct.

In step S12, the received data is placed into a receive packet queue, and a packet type is determined. If the data packet is an ACK packet, the transmitted data packet is managed based on the ACK packet, for example, a transmitted data packet corresponding to the ACK packet may be removed. If the data packet is a data packet including actual data content, the data packet is managed, for example, receive packet queue management, deduplication processing, or returning a corresponding ACK packet is performed. If the data packet is a heartbeat packet, where the heartbeat packet is mainly used for detecting the connectivity of the link layer, heartbeat management is performed, for example, a status of the link layer may be maintained based on the heartbeat packet, and the corresponding ACK packet is returned. Heartbeat detection may be performed by adopting, for example, a synchronized sequence number (SYN) protocol, which is not limited herein.

In step S13, the application layer registers at the transport layer in advance and monitors whether data arrives at the transport layer. After receiving the data packet, the transport layer transmits the data packet to the application layer.

### (3) Application layer.

Function definition: The application layer is located between the service layer and the transport layer, and is mainly responsible for receiving or transmitting data according to an agreed application layer protocol. The data obtained from the transport layer may be parsed and identified according to the agreed protocol, such as an application protocol of providing a client/server (C/S) communication or peer-to-peer communication.

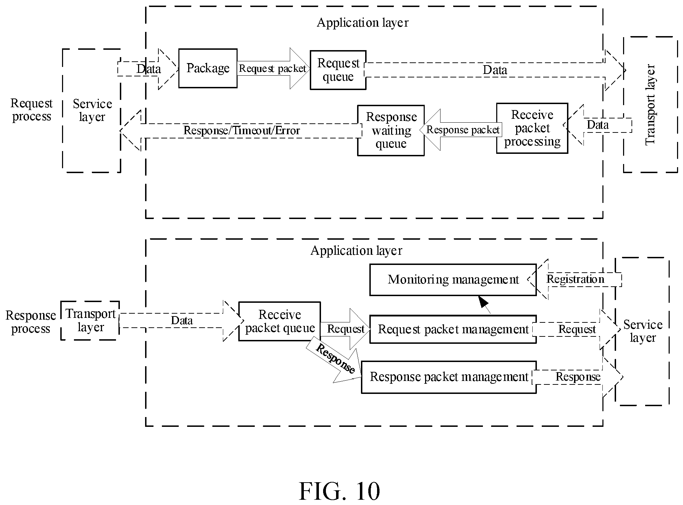

Specifically, the application layer transmits data to the transport layer, receives data transmitted by the transport layer, and transmits the data received from the transport layer to the service layer. Two communicating terminals may be both clients and each have functions of a server. The communication between the two terminals may be implemented in a request-response way. Specifically, reference is made to FIG. 10, which is a schematic diagram of a request-response process of an application layer according to an embodiment of this application. The process includes a request process and a response process, which are described in the following two aspects.

In a first aspect, the request process, that is, a transmission process is described, which is performed to transmit the data of the service layer to the transport layer.

The request process is similar to the data write process of the transport layer, and may be performed in the following steps S21 to S24.

In step S21, the data transmitted by the service layer is packaged and request packets are placed into a request queue.

In step S22, the request packets in the request queue are sequentially transmitted to the transport layer.

In step S23 data returned by the transport layer is received and receive packet processing is performed.

In step S24, each request packet in a response waiting queue is processed based on a returned response packet, for example, processes such as acknowledgement response, time-out retransmission, and error may be performed, and the processed response packet is transmitted to the service layer.

In a second aspect, the response process, that is, a receiving process is described, which is performed to transmit the data of the transport layer to the service layer in the following step S31 to S33.

In step S31, the data of the transport layer is parsed.

In step S32, the received packet is placed into the receiving packet queue, and a packet type is determined. If the packet is a response packet, response packet management is performed, for example, a corresponding original request is found from the response waiting queue, and the response packet is transmitted to the service layer. If the packet is a request packet, request packet management is performed, for example, a listener is informed that there is a new request, the listener herein is the service layer.

In step S33, the service layer registers at the application layer in advance and monitors whether data arrives at the application layer. After receiving the request packet, the application layer transmits the request packet to the service layer.

It can be seen that as shown in FIG. 7, when a first application in the first device and a second application in the second device perform two-way communication, the two-way communication framework is used for both transmitting and receiving data, and communication processes are the same. In addition, a process in which one party transmits data to the other party and the other party receives the data includes that the one party transmits the data through the service layer, the application layer, the transport layer, and the link layer, and the other party receives the data through the link layer, the transport layer, the application layer, and the service layer.

It can be seen that in the two-way communication framework provided in this embodiment of this application, a multi-layer protocol design is adopted, and the two-way communication function is achieved through multi-layer cooperation. In addition, standard interfaces are defined at the link layer, such that different physical communication links can be supported, and differences between the physical communication links can be ignored, which is applicable to various different physical communication links. Therefore, the two-way communication framework has good applicability, and can provide a unified and convenient invocation interface for an application and a service, thereby achieving stable, reliable, and consistent two-way data transmission.

It is also to be noted that only an example of a two-way communication framework is provided this embodiment of this application, and the protocol levels may be extended or simplified according to requirements. For example, a function of a specific layer may be merged upward or downward into an adjacent layer, or a function of a specific layer may be subdivided into one or two layers, which is not limited herein.

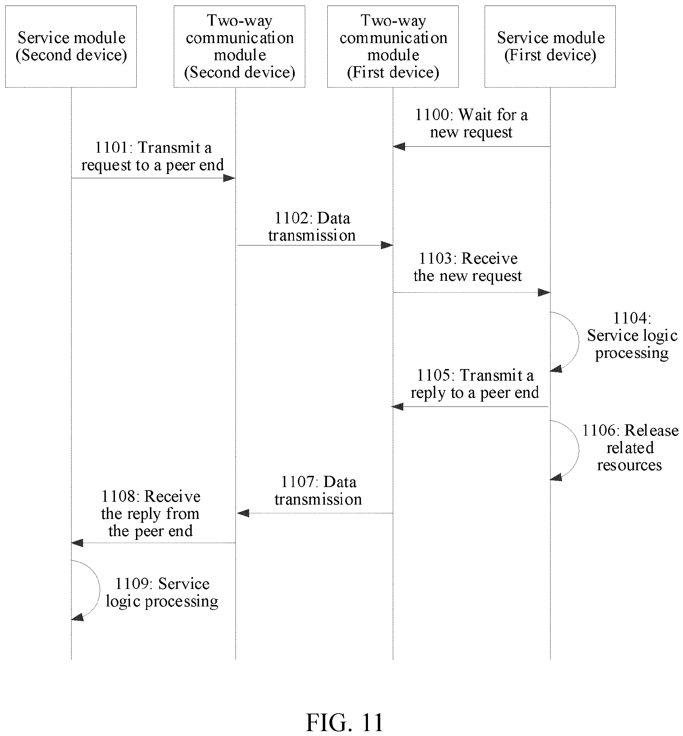

Based on the foregoing embodiments, a process of two-way communication between the first device and the second device is briefly described in the following. Reference is made to FIG. 11, which is a flowchart of an interaction where a second device transmits information to a first device according to an embodiment of this application. The interaction includes the following steps 1100 to 1109.

In step 1100, a service module of the first device waits for a new request by using a two-way communication module.

That is, the first device may detect, by using the two-way communication module, whether the second device transmits a request.

In step 1101, a service module of the second device transmits a request to a peer end by using a two-way communication module.

For example, the request herein may be a data packet such as a membership code or a payment code transmitted from the second device to the first device, so that the first device performs processing based on the request transmitted by the second device.

In step 1102, the two-way communication module of the second device transmits data to the two-way communication module of the first device.

In step 1103, the two-way communication module of the first device informs the service module that a new request is received.

In step 1104, the service module of the first device performs service logic processing.

For example, if a payment code is received, the first device performs payment processing subsequently based on the payment code, and may reply a payment result to the second device.

In step 1105, the service module of the first device transmits a reply to a peer end by using the two-way communication module.

In step 1106., the service module of the first device releases related resources.

In step 1107, the two-way communication module of the first device transmits data to the two-way communication module of the second device.

In this way, the reply data of the first device to the request is transmitted to the second device by using the two-way communication module.

In step 1108, the two-way communication module of the second device informs the service module that the reply of the peer end (that is, the first device) is received.

In step 1109, the service module of the second device performs service logic processing.

That is, the second device may perform service logic processing based on the reply data of the first device.

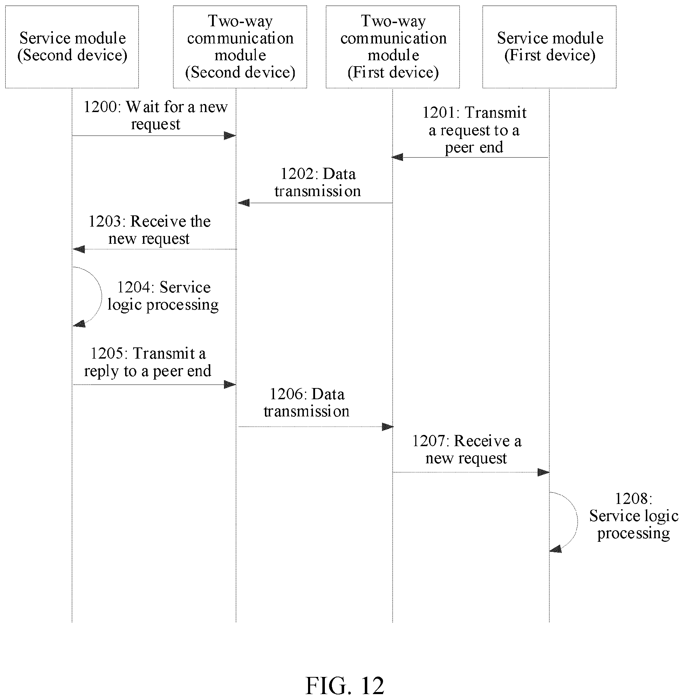

Correspondingly, reference is made to FIG. 12, which is a flowchart of an interaction where a first device transmits information to a second device according to an embodiment of this application. The interaction includes the following steps 1200 to 1208.

In step 1200, a service module of the second device waits for a new request by using a two-way communication module.

That is, the second device may monitor, by using the two-way communication module, whether the first device transmits a request.

In step 1201, a service module of the first device transmits a request to a peer end (that is, the second device) by using a two-way communication module.

For example, the request herein may be a data packet, such as a user identity information request, order information, membership information, or a payment result, that is transmitted by the first device to the second device.

In step 1202, the two-way communication module of the first device transmits data to the two-way communication module of the second device.

In step 1203, the two-way communication module of the second device informs a service module that a new request is received.

In step 1204, the service module of the second device performs service logic processing.

For example, if order information, payment result, or membership information is received, the order information, the membership information, or the payment result is displayed.

In another example, if a user identity information request is received, processing of obtaining user identity information provided above is performed to obtain corresponding user identity information.

In step 1205, the service module of the second device transmits a reply to a peer end (that is, the first device) by using the two-way communication module.

In step 1206, the two-way communication module of the second device transmits data to the two-way communication module of the first device.

In step 1207, the two-way communication module of the first device informs the service module that the reply of the peer end (that is, the second device) is received.

In step 1208, the service module of the first device performs service logic processing.

It can be seen that in this embodiment of this application, the first device and the second device receive and transmit information from and to each other by using the two-way communication modules, such that the first device and the second device may have more information transmission and interaction functions. Therefore, information about more payment details can be displayed on the second device to a user, such that the user can intuitively view various information about payment details during a payment process, thereby improving user consumption experience.

Based on the foregoing embodiments, the payment processing method in the embodiments of this application is further described in the following by using a specific application scenario, for example, the first device is a cash register and the second device is a payment device.

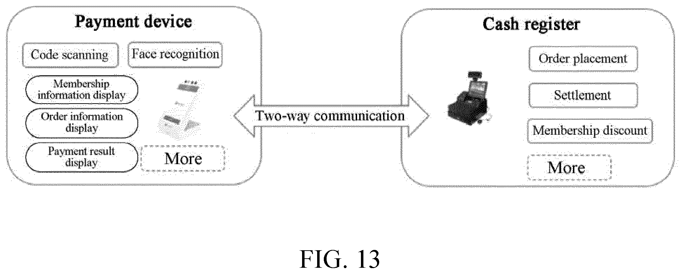

FIG. 13 is a schematic effect diagram of a two-way communication manner between a payment device and a cash register according to an embodiment of this application. As shown in FIG. 13, the payment device and the cash register perform two-way communication, that is, the payment device may receive and transmit information from and to the cash register, and the cash register may also receive and transmit information from and to the payment device. For example, the payment device may support code scanning or face recognition, membership information display, order information display, payment result display, and the like, and the cash register may support functions such as order placement, settlement, and membership discount acquisition.

Specifically, in this embodiment of this application, the payment processing method may include two parts: a membership information display stage and a payment detail display stage, which are described below.

In a first part, the membership information display stage is described.

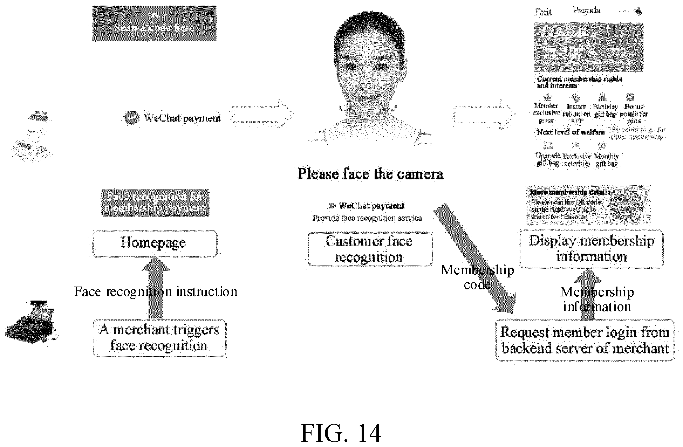

Reference is made to FIG. 14, which is a schematic diagram of a process interface of a membership information display stage according to an embodiment of this application. As shown in FIG. 14, membership information display stage includes the following steps S41 to S45.

In step S41, a merchant triggers face recognition by using the cash register, that is, transmit a user identity information request to the payment device.

In step S42, the payment device displays a homepage interface, and a payment platform such as WeChat payment is displayed on the homepage interface. In addition, other payment platforms may also be supported for a user to select from, and only a payment platform is taken as an example herein. In addition, functions such as "scan a code here" and "face recognition for membership payment" are displayed. After the payment device receives a face recognition instruction triggered by the cash register, a face recognition interface for a customer is entered.

In step S43, the user is prompted to face the camera, to obtain face information of the user. If the face is successfully recognized by a backend server of the merchant, and a membership code of the user provided by the backend server of the merchant is obtained, the membership code is a membership identity of the user pre-registered at the merchant, the membership code is transmitted to the cash register.

In step S44, the cash register requests member login from the backend server of the merchant based on the membership code, obtains membership information that is provided by the backend server of the merchant and that corresponds to the membership code, and transmits the membership information to the payment device.

In step S45, the payment device enters an interface for displaying the membership information, and displays the membership information to the user.

For example, the membership information may include a membership level, a bonus point, current membership rights interests, and the like. The membership level may be, for example, divided into a regular card membership and a silver card membership. The displayed membership information may be configured in advance, and is not limited in this embodiment of this application. In this way, the user may easily obtain the membership rights and interests of the user.

In a second part, the payment detail display stage is described.

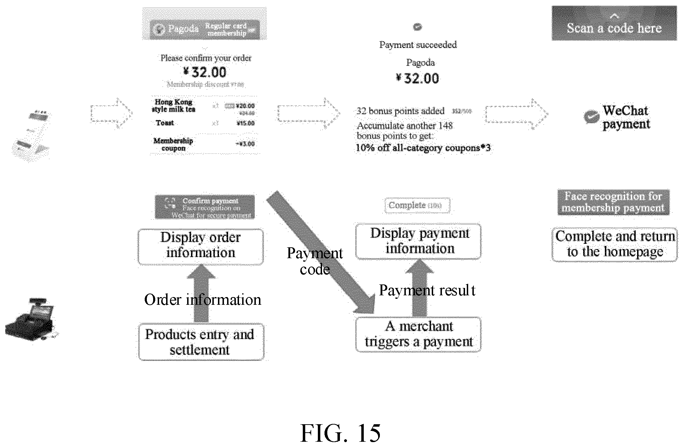

Reference is made to FIG. 15, which is a schematic diagram of a process interface of a payment detail display stage according to an embodiment of this application. As shown in FIG. 15, the payment detail display stage includes the following steps S51 to S55.

In step S51, a cashier enters product information and performs settlement by using the cash register, to generate order information. The cash register transmits the order information to the payment device.

In step S52, the payment device enters an interface for displaying the order information. In this case, the user may check, based on the order information displayed on the payment device, whether the order information is correct. After determining that the order information is correct, the user may click a "confirm payment" button on the interface to trigger a payment confirmation instruction, so that the payment device generates a payment code of the user after receiving the payment confirmation instruction, and transmits the payment code to the cash register.

In step S53, the cash register initiates a payment based on the payment code. Through the backend server of the merchant and a backend server of a payment platform selected by the user, the backend server of the payment platform makes a payment for the order information from a corresponding payment account, and returns a payment result to the cash register, such that the cash register can transmit the payment result to the payment device.

In step S54, the payment device enters an interface for displaying the payment result and displays the payment result.

For example, the payment result that may be displayed on the interface may include a payment amount and payment success information, and obtained membership rights and interests may also be displayed, which is not specifically limited. In this way, the user may obtain payment information.

In step S55, the payment is completed and the payment device returns to the homepage interface, that is, an entire payment process is completed.

In this way, through the two-way communication between the payment device and the cash register, the user can intuitively view details of the entire payment process and obtain better consumption experience.

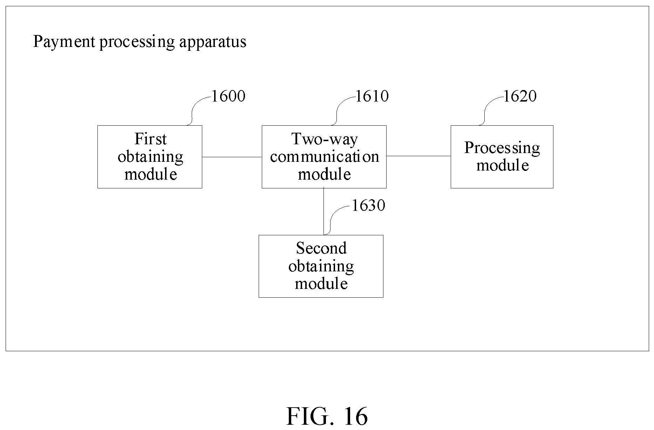

Based on the foregoing embodiments, referring to FIG. 16, in an embodiment of this application, a payment processing apparatus is mainly applied to a first device and includes: a first obtaining module 1600, a two-way communication module 1610, and a processing module 1620. The first obtaining module 1600 is configured to obtain order information. The two-way communication module 1610 is configured to transmit the order information to a second device for display, and receive a payment code transmitted by the second device. The payment code is generated by the second device based on a user payment identity of a user after receiving a payment confirmation instruction triggered by the user. The processing module 1620 is configured to perform, from a payment account corresponding to the payment code, payment processing on the order information based on the payment code, to obtain a payment result. The two-way communication module 1610 is further configured to transmit the payment result to the second device for display.

In an embodiment, before the order information is obtained, the two-way communication module 1610 is further configured to transmit a user identity information request to the second device, and receive user identity information transmitted by the second device. The user identity information is obtained by the second device based on an identity characteristic entered by the user.

The payment processing apparatus further includes: a second obtaining module 1630, which is configured to obtain, in a case that the user identity information indicates that the user is a registered member user, membership information corresponding to the user identity information based on the user identity information. The membership information indicates rights and interests information associated with a consumption behavior and user registration information.

The two-way communication module 1610 is further configured to transmit membership information to the second device for display.

In an embodiment, in a case that the identity characteristic is face information, the user identity information is obtained by the second device based on the acquired face information through a matching operation of a server. In a case that the user identity information indicates that the user is a registered member user, the user identity information is a membership code of the user.

In an embodiment, after the order information is transmitted to the second device, the first obtaining module 1600 is further configured to: update, after determining that an order modification request returned by the second device is received by the two-way communication module 1610, the order information based on the order modification request.

In an embodiment, the apparatus and the second device receive and transmit data packets from and to each other by using two-way communication modules.

In an embodiment, when the apparatus and the second device receive and transmit data packets from and to each other by using the two-way communication modules, the two-way communication module 1610 is further configured to:
transmit, by the apparatus, the data packet sequentially through a service layer, an application layer, a transport layer, and a link layer, and receive the data packet sequentially through the link layer, the transport layer, the application layer, and the service layer; and
transmit, by the second device, the data packet sequentially through the service layer, the application layer, the transport layer, and the link layer, and receive the data packet sequentially through the link layer, the transport layer, the application layer, and the service layer.

In an embodiment, standard read interface, write interface, and control interface are defined at the link layer, and a link layer protocol adapts to the physical communication link, so that the data packet is transmitted to the transport layer through the physical communication link, the standard read interface, write interface or control interface, and the data packet is transmitted to the physical communication link through the transport layer, the standard read interface, write interface or control interface.

In an embodiment, the physical communication link of the link layer adopts any one of an RS232 interface, a USB, a network cable, and Bluetooth.

In an embodiment, connectivity of the physical communication link of the link layer is detected at the transport layer by using a heartbeat keepalive mechanism.

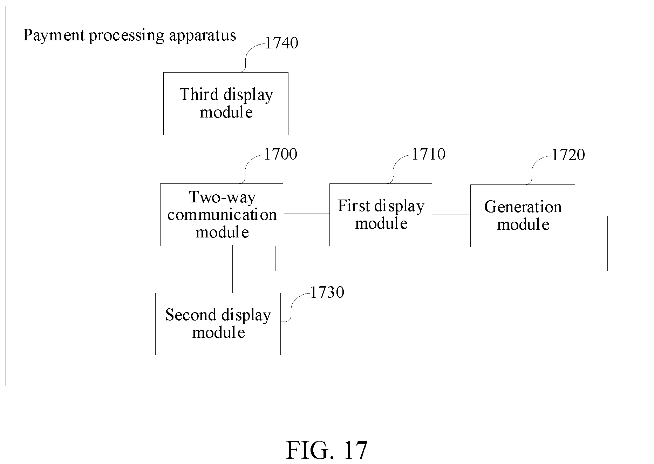

Based on the foregoing embodiments, referring to FIG. 17, in an embodiment of this application, another payment processing apparatus is mainly applied to a second device and includes: a two-way communication module 1700, a first display module 1710, a generation module 1720, and a second display module 1730. The two-way communication module 1700 is configured to receive order information transmitted by a first device. The first display module 1710 is configured to display the order information. The generation module 1720 is configured to generate a payment code based on a user payment identity of a user after a payment confirmation instruction triggered by the user is received. The two-way communication module 1700 is further configured to transmit the payment code to the first device, and receive a payment result transmitted by the first device. The payment result is obtained by the first device based on the payment code by performing, from a payment account corresponding to the payment code, payment processing on the order information. The second display module 1730 is configured to display the payment result.

In an embodiment, before the order information transmitted by the first device is received, the two-way communication module 1700 is further configured to:
receive a user identity information request transmitted by the first device;
obtain user identity information according to an identity characteristic entered by the user, and transmit the user identity information to the first device; and
receive membership information transmitted by the first device, the membership information being obtained based on the user identity information in a case that the first device determines that the user identity information indicates that the user is a registered member user, the membership information indicating rights and interests information associated with a consumption behavior and user registration information.

The payment processing apparatus further includes a third display module 1740, which is configured to display the membership information.

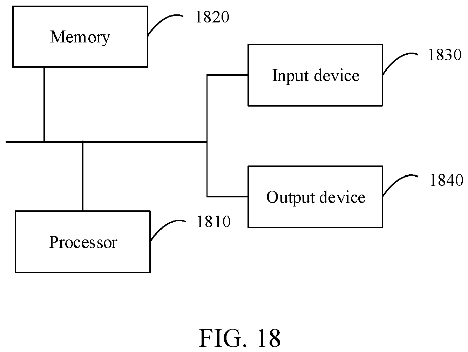

Based on the foregoing embodiments, reference is made to FIG. 18, which is a schematic structural diagram of a server according to an embodiment of this application.

A server is further provided in this embodiment of this application. The server may include a processor (a center processing unit) 1810, a memory 1820, an input device 1830, an output device 1840, and the like. The input device 1830 may include a keyboard, a mouse, a touchscreen, and the like. The output device 1840 may include a display device, such as a liquid crystal display (LCD) or a cathode ray tube (CRT).

The memory 1820 may include a read-only memory (ROM) and a random access memory (RAM), and provide program instructions and data stored in the memory 1820 for the processor 1810. In this embodiment of this application, the memory 1820 may be configured to store a program for performing any payment processing method in the embodiments of this application.

The processor 1810 invokes the program instructions stored in the memory 1820, and the processor 1810 is configured to perform any payment processing method in the embodiments of this application according to the obtained program instructions.

It is to be noted that the foregoing server may be the first server or the second server in this application, and performs a corresponding processing operation based on a request of the first device or the second device, and details are not described herein again.

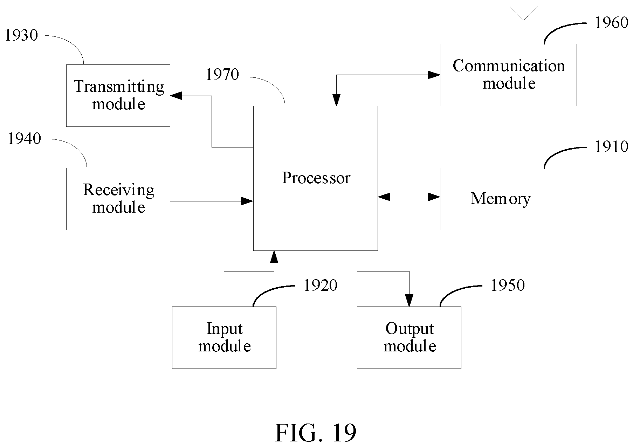

Based on the foregoing embodiments, reference is made to FIG. 19, which is a schematic structural diagram of an electronic device according to an embodiment of this application.

An electronic device is further provided in this embodiment of this application. The electronic device may be, but is not limited to, a mobile phone, a tablet computer, a computer, a payment device, or the like. The electronic device may include a memory 1910, an input module 1920, a transmitting module 1930, a receiving module 1940, an output module 1950, a communication module 1960, and a processor 1970.

The memory 1910 may include a read-only memory (ROM) and a random access memory (RAM), and provide program instructions and data stored in the memory 1910 for the processor 1970, and may further store an operating system of the electronic device, an Application (APP), and various data used by a module and the electronic device.

The input module 1920 may include a keyboard, a mouse, a touchscreen, and the like, and is configured to receive a digit, character information or a touch operation inputted by the user, and generate a key signal input related to user settings and function control of the electronic device. For example, in this embodiment of this application, the input module 1920 may receive an operation of confirming the order information by the user on the electronic device and an identity characteristic entered by the user entered on the electronic device.

The transmitting module 1930 may provide an interface between the electronic device and a server, and provide an interface with another electronic device.

The receiving module 1940 also provides an interface between the electronic device and a server, and provide an interface with another electronic device.

The output module 1950 may include a display module, such as an liquid crystal display (LCD) or a cathode ray tube (CRT). The display module may be configured to display information entered by the user or information provided to the user, or operation interfaces of various electronic devices.

The communication module 1960 includes, but is not limited to, a wireless fidelity (Wi-Fi) module, a Bluetooth module, an infrared communication module, and the like. When communicating with another electronic device, the communication module 1960 may be the two-way communication module in the embodiments of this application, and implements information transmission and reception based on a two-way communication framework.

The processor 1970 is a control center of the electronic device, and connects to various parts of the entire electronic device by using various interfaces and lines. By running or executing a software program and/or a module stored in the memory 1910, and invoking data stored in the memory 1910, the processor 1970 performs various functions of the electronic device and processes data, thereby performing overall monitoring on the electronic device.

Further, a structure of the electronic device shown in FIG. 19 is merely an example, the electronic device may include more or fewer components than those shown in the figure, or some components may be combined, or a different component deployment may be used.

The electronic device in this embodiment of this application may be the first device or the second device in this application, and may perform the corresponding payment processing method provided in the embodiments of this application.

Based on the foregoing embodiments, a computer-readable storage medium is furhher provided in an embodiment of this application, which stores a computer program. The computer program, when executed by a processor, performs the payment processing method according to any method embodiment described above.

Based on the foregoing embodiments, a computer program product is further provided in an embodiment of this application, which includes instructions. The instructions, when run on a computer, cause the computer to perform the steps of the payment processing method according to any method embodiment described above.

A person skilled in the art may understand that the embodiments of this application may be provided as a method, a system, or a computer program product. Therefore, this application may include hardware-only embodiments, software-only embodiments, or embodiments combining software and hardware. Moreover, this application may include a computer program product that is implemented on one or more computer-usable storage media (including but not limited to a magnetic disk memory, a CD-ROM, an optical memory, and the like) that include computer-usable program code.

This application is described with reference to flowcharts and/or block diagrams of the method, the device (system), and the computer program product according to the embodiments of this application. It is to be understood that computer program instructions may implement each process and/or block in the flowcharts and/or block diagrams and a combination of processes and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more processes in the flowcharts and/or one or more blocks in the block diagrams is generated by using instructions executed by the computer or the processor of the another programmable data processing device.

These computer program instructions may also be stored in a computer-readable memory that may instruct a computer or another programmable data processing device to work in a specific manner, so that the instructions stored in the computer-readable memory generate an artifact that includes an instruction apparatus. The instruction apparatus implements functions specified in one or more processes in the flowcharts and/or one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing functions specified in one or more processes in the flowcharts and/or one or more blocks in the block diagrams.

Although preferred embodiments of this application have been described, once a person skilled in the art learn of the basic creative concept, other changes and modifications may be made to these embodiments. Therefore, the claims are intended to be construed as covering the preferred embodiments and all changes and modifications falling within the scope of this application.

Apparently, a person skilled in the art can make various modifications and variations to the embodiments of this application without departing from the spirit and scope of the embodiments of this application. In this way, if these modifications and variations made to the embodiments of this application fall within the scope of the claims of this application and equivalent technologies thereof, this application also intends to include these changes and variations.

## Claims

1. A payment processing method, performed by a first device, the method comprising:
obtaining order information and transmitting the order information to a second device for display;
receiving a payment code transmitted by the second device, the payment code being generated by the second device based on a user payment identity of a user after receiving a payment confirmation instruction triggered by the user;
performing, from a payment account corresponding to the payment code, payment processing on the order information based on the payment code, to obtain a payment result; and
transmitting the payment result to the second device for display.

2. The method according to claim 1, wherein before the first device obtains the order information, the method further comprises:
transmitting a user identity information request to the second device;
receiving user identity information transmitted by the second device, the user identity information being obtained by the second device based on an identity characteristic entered by the user;
obtaining, based on the user identity information, membership information corresponding to the user identity information in a case that the user identity information indicates that the user is a registered member user, the membership information indicating interests and rights information associated with a consumption behavior and user registration information; and
transmitting the membership information to the second device for display.

3. The method according to claim 2, wherein in a case that the identity characteristic is face information, the user identity information is obtained by the second device based on the acquired face information through a matching operation of a server, wherein in a case that the user identity information indicates that the user is a registered member user, the user identity information is a membership code of the user.

4. The method according to claim 1, wherein after the first device obtains the order information and transmits the order information to the second device, the method further comprises:
updating, after an order modification request returned by the second device is received, the order information based on the order modification request.

5. The method according to any one of claims 1 to 4, wherein the first device and the second device receive and transmit data packets from and to each other by using two-way communication modules.

6. The method according to claim 5, wherein the first device and the second device receive and transmit data packets from and to each other by using two-way communication modules in a way that:
the first device transmits a data packet sequentially through a service layer, an application layer, a transport layer, and a link layer, and receives a data packet sequentially through the link layer, the transport layer, the application layer, and the service layer; and
the second device transmits the data packet sequentially through the service layer, the application layer, the transport layer, and the link layer, and receives the data packet sequentially through the link layer, the transport layer, the application layer, and the service layer.

7. The method according to claim 6, wherein standard read interface, write interface, and control interface are defined at the link layer, and a link layer protocol adapts to a physical communication link, and wherein the data packet is transmitted to the transport layer through the physical communication link and one of the standard read interface, write interface, and control interface, and the data packet is transmitted to the physical communication link through the transport layer and one of the standard read interface, write interface, and control interface.

8. The method according to claim 7, wherein the physical communication link of the link layer adopts any one of an RS232 interface, a USB, a network cable, and Bluetooth.

9. The method according to claim 7 or 8, wherein connectivity of the physical communication link of the link layer is detected at the transport layer by using a heartbeat keepalive mechanism.

10. A payment processing method, performed by a second device, the method comprising:
receiving order information transmitted by a first device;
displaying the order information;
generating a payment code based on a user payment identity of a user after receiving a payment confirmation instruction triggered by the user, and transmitting the payment code to the first device;
receiving a payment result transmitted by the first device, the payment result being obtained by the first device based on the payment code by performing, from a payment account corresponding to the payment code, payment processing on the order information; and
displaying the payment result.

11. The method according to claim 10, wherein before the receiving order information transmitted by a first device, the method further comprises:
receiving a user identity information request transmitted by the first device;
obtaining user identity information based on an identity characteristic entered by the user, and transmitting the user identity information to the first device;
receiving membership information transmitted by the first device, the membership information being obtained by the first device based on the user identity information in a case of determining that the user identity information indicates that the user is a registered member user, and the membership information indicating rights and interests information associated with a consumption behavior and user registration information; and
displaying the membership information.

12. An electronic device, comprising:
a memory;
a processor; and
a computer program stored in the memory and executable on the processor, wherein
the processor, when executing the computer program, performs steps of the method according to any one of claims 1 to 9, or claim 10 or 11.

13. A computer-readable storage medium comprising a computer program stored thereon, wherein the computer program, when executed by a processor, performs steps of the method according to any one of claims 1 to 9, and claims 10 to 11.

14. A computer program product comprising instructions, wherein the instructions, when run on a computer, cause the computer to perform steps of the method according to any one of claims 1 to 9, and claims 10 to 11.
